(19) Europäisches Patentamt
European Patent Office
Office européen des brevets

(11) **EP 1 403 100 A1**

(12) **EUROPÄISCHE PATENTANMELDUNG**

(43) Veröffentlichungstag:
**31.03.2004 Patentblatt 2004/14**

(51) Int Cl.7: **B60C 23/06**

(21) Anmeldenummer: **03011818.6**

(22) Anmeldetag: **26.05.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **27.09.2002 DE 10245265**
**29.11.2002 DE 10255777**

(71) Anmelder: **ROBERT BOSCH GMBH**
**70442 Stuttgart (DE)**

(72) Erfinder: **Polzin, Norbert**
**74374 Zaberfeld (DE)**

(54) **Adaptive Reifendruckverlusterkennung**

(57) Bei der vorliegenden Erfindung handelt es sich um ein Verfahren und eine Vorrichtung, mit dessen Hilfe ein Betricbszustand wenigstens eines Reifens eines Fahrzeugs überwacht wird. Dabei ist insbesondere vorgesehen, dass es sich bei dem überwachten Betriebszustand um einen Reifenzustand des Rades beispielsweise den Luftdruck des Reifens handelt. Weiterhin ist vorgesehen, dass in der Überwachung eine Reifenzustandsgröße, die den aktuellen Betriebszustand des Reifens repräsentiert und eine Kalibrierungsgröße, die den Sollreifenzustand des Reifens repräsentiert, berücksichtigt wird. Der Kern der Erfindung besteht dabei darin, dass die Überwachung in unterschiedlichen Überwachungsmodi erfolgt. Der jeweils zur Überwachung herangezogene Überwachungsmodus wird dabei in Abhängigkeit von wenigstens einer den Fahrzustand repräsentierenden Fahrzustandsgröße bestimmt. In einer besonderen Ausführungsform ist für diese Fahrzustandsgröße vorgesehen, die Fahrzeuggeschwindigkeit als Unterscheidungskriterium für die unterschiedlichen Überwachungsmodi zu wählen.

Fig. 2

EP 1 403 100 A1

**Beschreibung**

Stand der Technik

Die Erfindung betrifft ein Verfahren und eine Vorrichtung zur Überwachung eines Betriebszustands wenigstens eines Reifens eines Fahrzeugs mit den Merkmalen der unabhängigen Ansprüche.

Die Reifen eines Fahrzeugs gehören zu den fahrsicherheitskritischen Systeme während des Fahrzeugbetriebs. Ein plötzlicher Druckabfall, wie er regelmäßig als ein Anzeichen für einen Reifenschaden auftritt, kann zu einer Einschränkung der Bodenhaftung und unter Umständen dazu führen, dass sich das Fahrzeug nicht mehr beherrschen lässt. Gerade bei hohen Geschwindigkeiten können sich daher Reifendruckverluste extrem verheerend auswirken. Eine rechtzeitige Erkennung eines defekten Reifens kann somit erheblich zur Fahrsicherheit beitragen.

Aus dem Stand der Technik sind Systeme bekannt, die den Zustand eines Reifens, insbesondere den Luftdruck, überwachen. Neben der direkten Bestimmung des Luftdrucks eines Reifens können die Drehgeschwindigkeiten der Räder herangezogen werden, um eine Änderung des Reifendrucks zu bestimmen. So kann der Verlauf der Drehgeschwindigkeiten einzelner Räder aufgenommen und dazu verwendet werden, die Änderung des Betriebszustands der Reifen aufzuzeigen. In der DE 36 10 116 A1 und in der DE 32 36 520 A1 werden entsprechende Systeme vorgestellt, die bei bestimmten Betriebszuständen (ungebremste, unbeschleunigte Geradeausfahrt) den Reifenzustand anzeigen. Weiterhin wird in diesen Schriften eine Normierung der Drehgeschwindigkeiten auf die jeweilige Fahrzeugsgeschwindigkeit vorgeschlagen.

Für indirekt messende Reifendruckkontrollsysteme ist die Verwendung von Differenzen der Raddrehgeschwindigkeiten einzelner Räder zur Reifenzustandserkennung beispielsweise aus der EP 0 291 217 B1 bekannt. Damit können Druckverluste über die abweichenden Radgeschwindigkeiten bei vermindertem Reifenumfang ermittelt werden.

In der DE 199 44 391 A1 wird die Anpassung eines zur Überwachung des Reifendrucks dienenden Kalibrierungswertes beschrieben. Dabei wird aufgrund eines geänderten Betriebszustandes des Rades eine Neukalibrierung des Reifendrucksystems durchgeführt, wobei der alte Wert überschrieben wird.

Vorteile der Erfindung

Bei der vorliegenden Erfindung handelt es sich um ein Verfahren und eine Vorrichtung, mit dessen Hilfe ein Betriebszustand wenigstens eines Reifens eines Fahrzeugs überwacht wird. Dabei ist insbesondere vorgesehen, dass es sich bei dem überwachten Betriebszustand um einen Reifenzustand des Rades beispielsweise den Luftdruck des Reifens handelt. Weiterhin ist vorgesehen, dass in der Überwachung eine Reifenzustandsgröße, die den aktuellen Betriebszustand des Reifens repräsentiert und eine Kalibrierungsgröße, die den Sollreifenzustand des Reifens repräsentiert, berücksichtigt wird. Der Kern der Erfindung besteht dabei darin, dass die Überwachung in unterschiedlichen Überwachungsmodi erfolgt. Der jeweils zur Überwachung herangezogene Überwachungsmodus wird dabei in Abhängigkeit von wenigstens einer den Fahrzustand repräsentierenden Fahrzustandsgröße bestimmt.

In einer besonderen Weiterbildung der Erfindung wird der Überwachungsmodus in Abhängigkeit von einem Vergleich der Fahrzustandsgröße mit einem vorgebbaren Grenzwert gewählt. So kann beispielsweise die Fahrzeuggeschwindigkeit mit einer gegebenen Geschwindigkeit vergleichen werden, wobei der Überwachungsmodus beim Überschreiten der gegebenen Geschwindigkeit gewechselt wird. Vorzugsweise ist in der Weiterbildung vorgesehen, dass die Erfindung über zwei Überwachungsmodi verfügt, wobei in Abhängigkeit von dem Vergleich ein Übergang vom ersten Überwachungsmodus, in dem die Überwachung normalerweise beginnt, in den zweiten Überwachungsmodus stattfinden kann. Für den Vergleich wird vorteilhafterweise neben dem Überschreiten des vorgegebenen Grenzwertes auch das zeitliche Verhalten der Überschreitung des Grenzwertes überwacht. Als Resultat des Vergleichs wird der Übergang in den zweiten Überwachungsmodus erst durchgeführt, wenn die Überschreitung des Grenzwertes eine vorgebbare Zeitdauer anhält. Iin einer weiteren Ausgestaltungsform der Erfindung ist vorgesehen, dass nach dem erfolgten Wechsel in den zweiten Überwachungsmodus kein weiterer Vergleich mehr vorgenommen wird. Als Resultat daraus ist kein weiterer Wechsel des Überwachungsmodus vorgesehen.

In einer vorteilhaften Ausführungsform ist vorgesehen, als Fahrzustandsgröße die Fahrzeuggeschwindigkeit als Unterscheidungskriterium zwischen den einzelnen Überwachungsmodi zu wählen. Dadurch wird eine Überwachung angepasst an den momentanen Fahrzustand ermöglicht.

Eine Weiterbildung der Erfindung besteht darin, dass vorgesehen ist, jeden Überwachungsmodus mit wenigstens einem Kalibrierungsmodus auszustatten. Weiterhin ist vorgesehen, dass jeder Kalibrierungsmodus wenigstens eine Kalibrierungsgröße enthält. So lassen sich innerhalb der einzelnen Überwachungsmodi feine Abstufungen erreichen, die eine genaue Feststellung und Überwachung des Betriebszustand des Reifens ermöglichen. Um die Ermittlung der Kalibrierungsgrößen möglichst nahe an den tatsächlichen Betrieb des Fahrzeugs anzupassen, werden die Kalibrierungsgrößen in Abhängigkeit einer Reihe von Parametern bestimmt. So fließt in die Ermittlung der Kalibrierungsgröße wenigstens eine Reifenzustandsgröße, eine Fahrzustandsgröße, eine Kalibrierungsanforderung und/oder der Überwachungsmodus ein. Durch eine Mittelwertbildung mehrerer Reifenzustandsgrößen bei der Ermittlung der Kalibrierungsgrößen können so Spitzen bzw. kurzfristige Störungen aus der Ermittlung eliminiert werden. Mit der Fahrzustandsgröße, beispielsweise der Fahrzeuggeschwindigkeit, kann eine angepasste Kalibrierung beispielsweise auf das veränderte physikalische Verhalten des Reifens bei hohen Geschwindigkeiten berücksichtigt werden. Durch die Kalibrierungsanforderung kann darüber hinaus gezielt eine Kalibrierung durchgeführt werden, wenn es die Fahrsituation erlaubt.

Bei einer vorteilhaften Ausgestaltung der Erfindung wird die Ermittlung der Kalibrierungsgröße in Abhängigkeit von der Anzahl der erfassten Reifenzustandsgrößen und dem Überwachungsmodus vorgenommen. Dabei ist insbesondere vorgesehen, je nach vorgegebener Anzahl der in die Ermittlung eingegangenen Reifenzustandsgrößen eine Kalibrierungsgröße erster Art und/oder eine Kalibrierungsgröße zweiter Art zu bestimmen. Eine besondere Ausführungsform sieht dabei vor, dass die Kalibrierungsgröße als Mittelwert der in die Ermittlung eingegangenen Anzahl an Reifenzustandsgrößen bestimmt wird.

Eine Weiterbildung der Erfindung besteht darin, dass die Ermittlung der Kalibrierungsgröße der ersten Art bis zur Voraussetzung der Bildung der Kalibrierungsgröße der zweiten Art erfolgt. Zusätzlich ist vorgesehen, dass die weitere Ermittlung der Kalibrierungsgröße beendet wird, wenn die Kalibrierungsgröße der zweiten Art gebildet wurde. Eine vorteilhafte Ausführungsform der Erfindung sieht jedoch vor, dass die Ermittlung einer neuen Kalibrierungsgröße erneut durchgeführt wird, wenn eine Kalibrierungsanforderung erkannt wird.

Die Abhängigkeit der Überwachung vom Überwachungsmodus stellt eine weitere vorteilhafte Ausgestaltung der Erfindung dar. Dabei wird eine Reifenzustandsgröße, die den aktuellen Reifenzustand darstellt, ermittelt und in Bezug zur Kalibrierungsgröße des Überwachungsmodus gebracht. Aus dem damit verbundenen Vergleich der beiden Größen wird eine Fehlfunktion dann erkannt, wenn der Unterschied außerhalb eines vorgegebenen Bereichs, d.h. über einen vorgegebenen Schwellwert hinaus geht. Vorteilhafterweise wird in einer besonderen Ausführungsform der Erfindung der vorgegebene Bereich bzw. der Schwellwert in Abhängigkeit von wenigstens einer Fahrzustandsgröße, beispielsweise der Fahrzeuggeschwindigkeit gewählt. Dadurch können auch nichtlineare oder nur abschnittsweise lineare Korrelationen zwischen Abrollumfang und Fahrzeuggeschwindigkeit berücksichtigt werden. Alternativ bzw. gleichzeitig kann jedoch auch die Überwachung abhängig von der zur Ermittlung der Kalibrierungsgröße verwendeten Anzahl an Reifenzustandsgrößen gewählt werden. Der Vorteil bei dieser Ausführungsform liegt dabei darin, dass die Schwellwerte durch die Modifizierung unterschiedliche Empfindlichkeiten aufweisen. So reduzieren eine hohe Anzahl an Reifenzustandsgrößen bei der Ermittlung der Kalibrierungsgröße die erfasste Schwankungsbreite der Reifenzustandsgrößen und erlaubt dadurch eine empfindlichere Überwachung.

Eine besondere Weiterbildung besteht darin, dass die Überwachung des Reifenzustands durch eine den Reifenzustand repräsentierende Reifenzustandsgröße erfolgt. Dabei wird die Reifenzustandsgröße anhand von Raddrehzahlen gebildet. Die Ermittlung der Reifenzustandsgröße wird durch eine Differenzbildung der Raddrehzahlen an jeweils wenigstens zwei Rädern bestimmt. Dabei ist insbesondere vorgesehen, die Differenzen der Raddrehzahlen an den Rädern einer Achse und/oder an den diagonal angeordneten Rädern zu bilden. Daneben besteht aber auch die Möglichkeit, die Reifenzustandsgröße durch eine Differenzbildung zwischen der Summe der Raddrehzahlen an den Rädern der vorderen Achse und der hinteren Achse zu bestimmen. Ebenso ist jedoch denkbar, die Reifenzustandsgröße als Differenz zwischen der Summe der Raddrehzahlen an den Rädern der linken und der rechten Seite des Fahrzeugs zu bestimmen. Bei einer weiteren Ausführungsform ist darüber hinaus vorgesehen, die gebildeten Differenzen auf die Fahrzeuggeschwindigkeit zu normieren. Weiterhin ist vorgesehen, die Raddrehzahlen durch eine die Raddrehzahl repräsentierende Raddynamikgröße zu ermitteln.

Ein weiterer Vorteil in einer besonderen Ausgestaltung der Erfindung besteht darin, dass die Kalibrierungsanforderung zu einem vorgegebenen Zeitpunkt erfolgt. So kann der Zeitpunkt durch einen vom Fahrer initiierten Befehl aber auch automatisch durch einen erkannten Reifenwechsel, bzw. erkannten Aufpumpvorgangs des Reifens bestimmt werden.

Eine Ergänzung der Erfindung sieht vor, beim Erkennen einer Fehlfunktion, d.h. beim Auftreten eines Druckverlustes in einem Reifen, den Fahrer akustisch und/oder optisch darüber zu informieren. Weiterhin ist möglich, bei Erkennung einer Fehlfunktion eine im Fahrzeug befindliche Bremsanlage und/oder ein aktives Lenksystem derart anzusteuern, dass die Reaktion des Fahrzeugs der Ursache der Fehlfunktion entgegenwirkt. So können gefährliche Fahrsituationen aufgrund eines Druckverlustes in den Reifen kompensiert bzw. entschärft werden.

In einer weiteren Ausgestaltung der Erfindung wird vorteilhafterweise das Überschreiten des vorgebbaren Grenzwertes durch die Fahrzustandsgröße während einer vorgegebenen Zeit als eine Vorraussetzung eines Reifenzustands interpretiert, bei dem eine plastische Verformung des Reifens auftritt.

Weitere Ausgestaltungen sind den Unteransprüchen zu entnehmen.

Zeichnungen

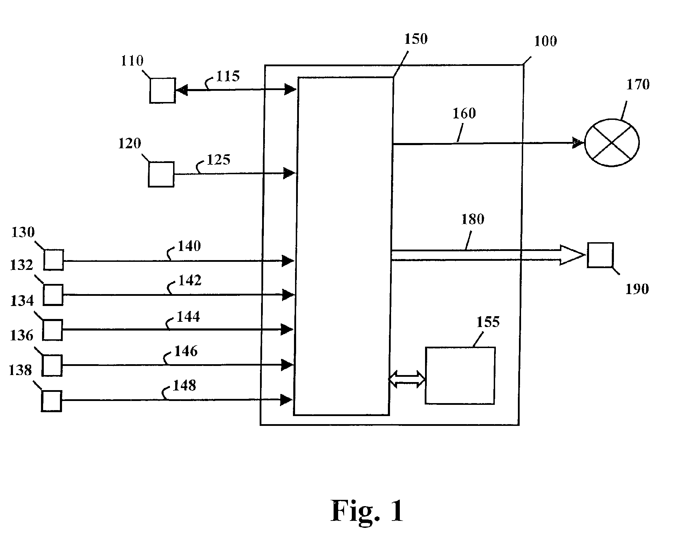

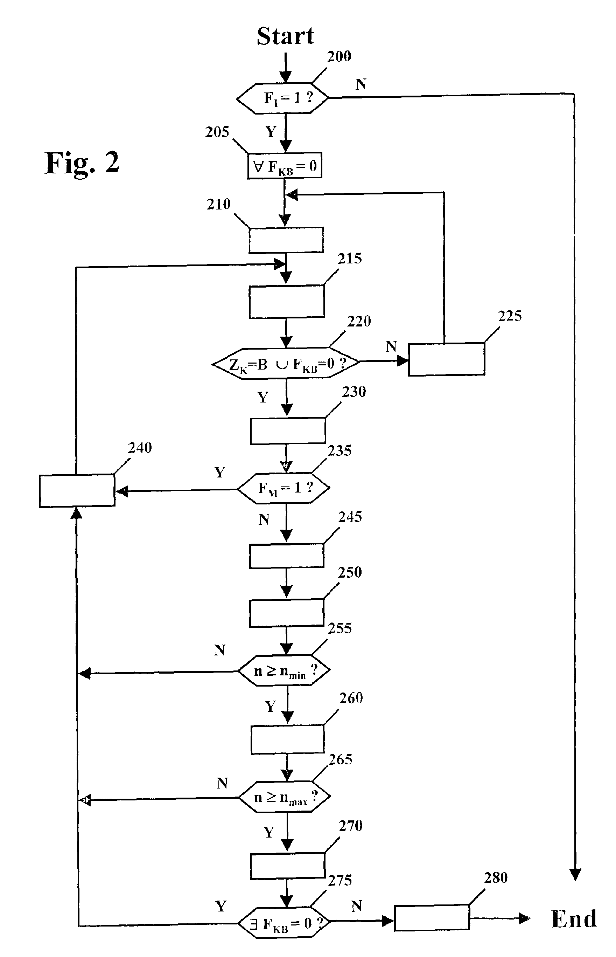

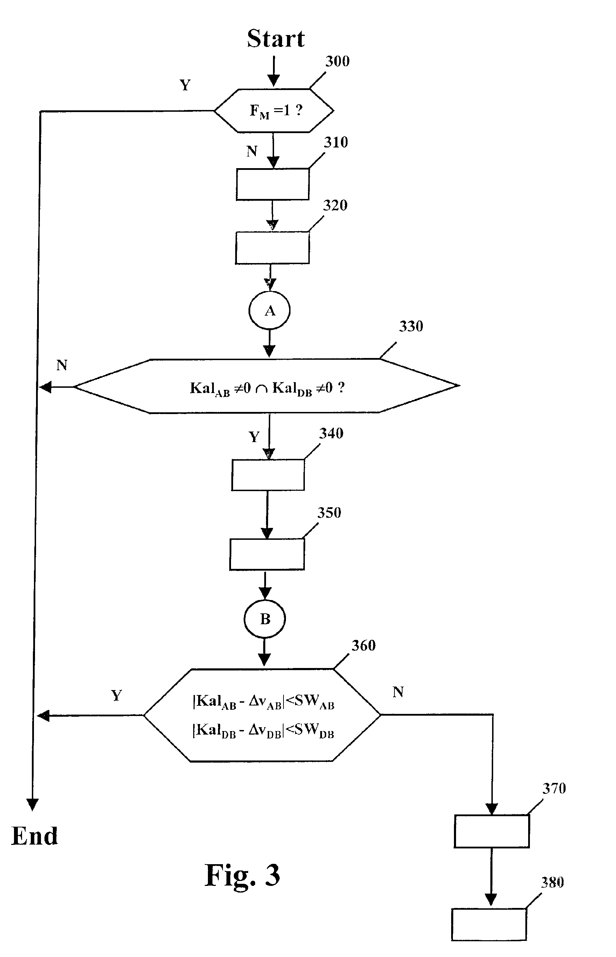

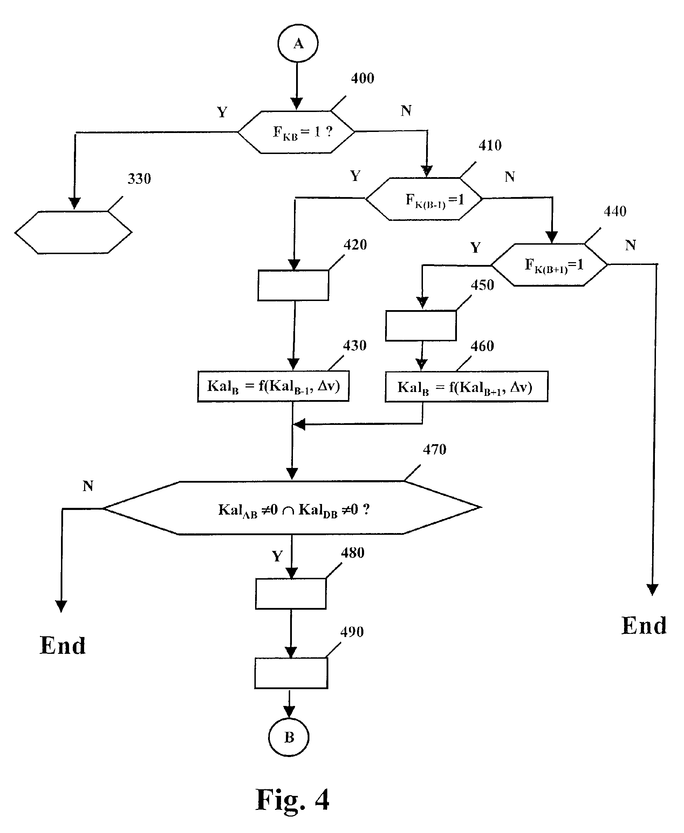

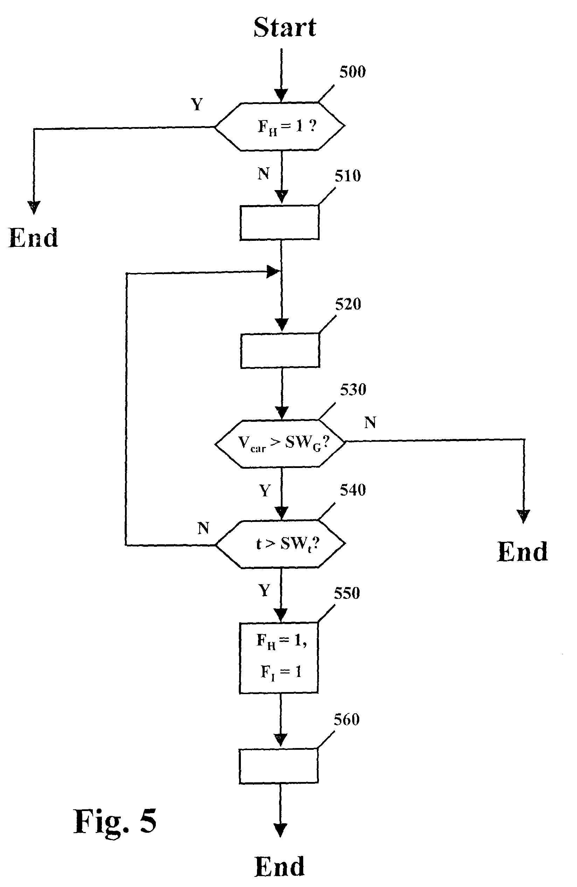

Figur 1 zeigt in einem Blockschaltbild anschaulich die Aufnahme der Betriebsgrößen, die zur Überwachung des Reifenzustands notwendig sind, sowie die Verarbeitung der eingelesenen Werte und die Weiterleitung einer erkannten Fehlfunktion. Das Flussdiagramm in Figur 2 stellt die Initialisierung bzw. Ermittlung der Kalibrierungsgrößen dar. In Figur 3 wird schematisch der Ablauf der Überwachung des Reifenluftdrucks gezeigt. Figur 4 zeigt die Vorgehensweise eines weiteren Ausführungsbeispiels. Mit der Figur 5 wird die Überwachung des Erreichens eines Hochgeschwindigkeitsbereichs gezeigt.

Ausführungsbeispiele

Anhand der Zeichnungen sollen im folgenden Ausführungsbeispiele beschrieben werden, mit dem in einem Fahrzeug der Betriebszustandes wenigstens eines Reifens überwacht werden kann.

Figur 1 zeigt ein Ausführungsbeispiel zur Überwachung eines Fahrzeugs mit 4 Reifen. Eine Erweiterung des Beispiels auf mehrere Reifen ist ohne weiteres möglich, jedoch für die Darstellung des Beispiels nicht nötig. Zur Aufnahme der zur Überwachung benötigten Überwachungsparameter besitzt jedes mit einem Reifen ausgestattete Rad einen Raddrehzahlsensor (130 bis 136) zur Ermittlung der Raddrehzahl. Von diesen Raddrehzahlsensoren (130 bis 136) werden die Raddrehzahlgrößen $v_{VR}$(140), $v_{VL}$ (142), $v_{VR}$ (144), und $v_{VL}$ (146), die die Raddrehzahlen repräsentieren, an die zentrale Überwachungseinheit 100 weitergeleitet. Zur Komplettierung der fahrdynamischen Größen zur Überwachung liest die Überwachungseinheit 100 aus einem entsprechenden System 138 eine die Fahrzeuggeschwindigkeit repräsentierende Größe $v_{car}$ (148) ein. Aus diesen eingelesenen Werten werden in Block 150 Reifenzustandsgrößen $\Delta v_A$, $\Delta v_D$ ermittelt, die den Reifenzustand der Räder repräsentieren.

Durch eine Initialisierung, wie sie manuell durch den Fahrer und/oder automatisch beispielsweise bei einem Reifenwechsel und/oder einem Aufpumpvorgangs des Reifens erfolgen kann, wird ein Flag $F_I$ (115) gesetzt, d.h. Flag $F_I$ wechselt vom Wert 0 auf den Wert 1. Eine weiteres Ausführungsbeispiel zeigt jedoch, dass neben dem kontinuierlichen Setzen des Flags ebenfalls ein kurzzeitiges Setzten des Flags $F_I$ (115) zur Initialisierung des Kalibrierungsvorganges ausreicht.

Im Block 150 werden aufgrund des gesetzten Flags $F_I$ (115) aus den Reifenzustandsgrößen Kalibrierungswerte in Abhängigkeit von der eingelesenen Fahrzeuggeschwindigkeitsgröße $v_{car}$ (148) gebildet. Dabei werden jedoch nur solche Raddrehzahlgrößen (140 bis 146) zur Ermittlung der Reifenzustandsgrößen herangezogen, die dazu geeignet sind. So sind Fahrsituationen denkbar, wie beispielsweise eine starke Verzögerung/Beschleunigung, Kurvenfahrt oder eine ABSR/ESP-Regelung, die keine zur Auswertung geeigneten Reifenzustandsgrößen liefern. Zur Herausfilterung solcher Fahrsituationen aus der Überwachung bzw. Ermittlung der Kalibrierungsgrößen, wird ein Fahrbeobachtungsmodul 120 eingesetzt, das die entsprechenden Fahrsituationen erkennt und ein Flag $F_M$ (125) setzt, wenn die Überwachung bzw. Kalibrierung kurzzeitig ausgesetzt werden soll.

Da die Reifen abhängig von der Drehgeschwindigkeit des Rades unterschiedliche physikalische Eigenschaften im Fahrverhalten aufweisen, werden verschiedene Geschwindigkeitsbereiche gebildet. Dies kann beispielweise durch den Index B gemäß der Tabelle:

| Index B | Geschwindigkeitsbereich $V_B$ [km/h] |
|---------|--------------------------------------|
| 1       | 0-50                                 |
| 2       | 51 - 100                             |
| 3       | 101 - 150                            |
| 4       | 151 - 200                            |
| 5       | 201 - 250                            |

erfolgen, wobei jedoch auch andere Einteilungen, angepasst an das jeweilige Fahrzeug denkbar sind. Weiterhin ist auch möglich, die Geschwindigkeitsbereiche während des Betriebs des Fahrzeugs variabel zu halten.

Da sich mit den Reifeneigenschaften auch das Verhalten der Reifen ändert, ist es notwendig, zu jedem Geschwindigkeitsbereich eigene Kalibrierungsgrößen zu ermitteln. Bei der Überwachung des Betriebszustandes der Reifen wird deshalb zur Zuordnung der entsprechenden Kalibrierungsgröße die Fahrzeuggeschwindigkeitsgröße $v_{car}$ (148) herangezogen.

Die in den einzelnen Geschwindigkeitsbereichen ermittelten Kalibrierungsgrößen, sowie die Anzahl n der dabei berücksichtigten Reifenzustandsgrößen, werden in einem Speicher 155 abgelegt und bei Bedarf ausgelesen. Wird bei der Überwachung eine Fehlfunktion festgestellt, so kann der Fahrer darüber informiert werden. Dies kann sowohl optisch als auch akustisch über eine entsprechende Anzeige 170 erfolgen. Ebenso ist denkbar, dass aufgrund der erkannten Fehlfunktion ein im Fahrzeug befindliches System 190 angesteuert wird, das den möglichen Beeinträchtigungen des Fahrverhaltens durch den Reifendruckverlust mit einer entsprechenden Ansteuerung 180 entgegenwirkt. Gängige Systeme, die dies leisten können sind dabei beispielsweise ein ABS, ESP oder auch ein aktives Lenksystem.

Das Flussdiagramm in Figur 2 beschreibt einen möglichen Programmablauf der Ermittlung der Kalibrierungsgrößen, wie sie zur Überwachung des Reifenzustandes, insbesondere des Reifenluftdrucks, als Referenzwerte benötigt werden. In einem ersten Schritt 200 wird die Kalibrierungsanforderung abgefragt. Dies geschieht dadurch, dass das Flag $F_I$ (115) abgefragt wird. Wird ein ungesetztes Flag $F_I$ (115), d.h. $F_I=0$ erkannt, beendet das Programm den Durchlauf. Ist mit einem gesetzten Flag $F_I$ (115), d.h. $F_I=1$ jedoch eine Kalibrierungsanforderung durch den Fahrer oder aufgrund einer automatischen Erkennung erfolgt, werden im folgenden Schritt 205 die Flags $F_{KB}$, die die erfolgreiche Ermittlung einer Kalibrierungsgröße für den Geschwindigkeitsbereich $V_B$ durch ein gesetztes Flag $F_{KB}=1$ darstellen, für alle Indices B auf den Wert 0 gesetzt. Daraufhin werden im Schritt 210 die Durchlaufvariable $n_B$, die Kalibrierungsgrößen $Kal_{AB}$ für die achsweise und $Kal_{DB}$ für die diagonale Überwachung ebenfalls für alle Indices B auf den Wert 0 gesetzt. Zur Bestimmung des aktuellen Geschwindigkeitsbereichs $V_B$ wird in Schritt 215 die Fahrzeuggeschwindigkeit repräsentierende Fahrzeuggeschwindigkeitsgröße $v_{car}$ (148) eingelesen. Durch einen Vergleich der Fahrzeuggeschwindigkeitsgröße $v_{car}$ (148) mit den vorher eingeteilten Geschwindigkeitsbereichen $V_B$ kann der Bereich bestimmt werden, in dem sich das Fahrzeug befindet. Aus diesem Vergleich erhält man den zugehörigen Wert des Index B, der für die weitere Ermittlung der Kalibrierungsgröße verwendet wird. Wird über die Durchlaufvariable $n_B$ festgestellt, dass es sich um den ersten Durchlauf der Ermittlung der Kalibrierungsgröße handelt, d.h. $n_B=0$, so wird der zum aktuellen Geschwindigkeitsbereich $V_B$ gehörende Wert des Index B in einer Variablen $Z_K$ abgespeichert. Dies erlaubt die Zuweisung bzw. die Identifikation der ermittelten Kalibrierungsgröße zu dem dazugehörigen Geschwindigkeitsbereich. Im Schritt 220 wird anschließend überprüft, ob der aktuelle Geschwindigkeitsbereich $V_B$ mit dem Bereich übereinstimmt, in dem die Kalibrierung durchgeführt werden soll. Dies geschieht dadurch, dass der in Schritt 215 ermittelte Wert von B mit der Variablen $Z_K$ verglichen wird. Durch diesen Vergleich ist somit möglich, den Wechsel in einen anderen Geschwindigkeitsbereich festzustellen, der durch eine geänderte Fahrzeuggeschwindigkeit $v_{car}$ (148) hervorgerufen wird. Gleichzeitig wird über das Flag $F_{KB}$ die Existenz einer bereits bestimmten Kalibrierungsgröße zweiter Art für den Geschwindigkeitsbereich $V_B$ abgefragt. So bezeichnet, wie eingangs beschrieben, ein gesetztes Flag $F_{KB}=1$ das Vorhandensein einer Kalibrierungsgröße der zweiten Art in dem entsprechenden Geschwindigkeitsbereich $V_B$. Wird die Kombination der beiden Vergleiche

$$B=Z_K$$

und

$$F_{KB}=0$$

negativ entschieden, so wird in Schritt 225 die Zuweisung

$$Z_K=B$$

vorgenommen, um die Variable $Z_K$ an den aktuellen Geschwindigkeitsbereich mit dem Wert des Index B anzupassen. Nach dieser Zuweisung im Schritt 225 wird mit Schritt 210 ein neuer Zyklus zur Ermittlung der Kalibrierungsgröße gestartet. Bei einem positiven Ausgang des Vergleichs in Schritt 220 wird das Programm mit dem nächsten Schritt 230 abgearbeitet. Hierbei werden die Raddrehzahlgrößen $v_{VR}$ (140), $v_{VL}$ (142), $v_{VR}$ (144), und $v_{VL}$ (146) eingelesen. Befindet sich das Fahrzeug in einer Fahrsituation, die die Ermittlung einer zur Auswertung geeigneten Reifenzustandsgröße nicht zulässt, so ist das Flag $F_M$ (125) gesetzt, d.h. $F_M=1$. Aufgrund dieses gesetzten Flags $F_M$ (125) wird in Schritt 235 auf den Schritt 240 des Flussdiagramms verzweigt, bei dem die Zuweisung

$$Z_K=B$$

vorgenommen wird, um die Variable $Z_K$ an den aktuellen Geschwindigkeitsbereich mit dem Wert des Index B anzupassen. Nach erfolgt Zuweisung $Z_K=B$ im Schritt 240 wird das Programm in einer Rückschleife auf den Schritt 215 verwiesen.

Ist jedoch keine unzulässige Fahrsituation festgestellt worden, d.h. $F_M=0$, so werden im Schritt 245 mit

$$\Delta v_A := \{(v_{VL} + v_{VR}) - (v_{HL} + v_{HR})\} / v_{car} \,.$$

$$\Delta v_D := \{(v_{VL} + v_{HR}) - (v_{VR} + v_{HL})\} / v_{car}$$

die Reifenzustandsgrößen ermittelt, die sowohl auf achsweiser ($\Delta v_A$) als auch auf diagonaler ($\Delta v_A$) Basis der Raddrehzahlgrößen $v_{VR}$ (140), $v_{VL}$ (142), $v_{VR}$ (144), und $v_{VL}$ (146) normiert auf die Fahrzeuggeschwindigkeit $v_{car}$ (148) bestimmt werden. Weiterhin wird in Schritt 245 die Durchlaufvariable $n_B$ mit

$$n_B = n_B + 1$$

inkrementiert. Die so ermittelten Radzustandsgrößen $\Delta v_A$ und $\Delta v_D$ werden anschließend in Schritt 250 zur Ermittlung der Kalibrierungsgrößen $Kal_{AB}$ und $Kal_{DB}$ gemäß

$$Kal_{AB} = Kal_{AB} + \frac{Kal_{AB} - \Delta v_{AB}}{n_B}$$

und

$$Kal_{DB} = Kal_{DB} + \frac{Kal_{DB} - \Delta v_{DB}}{n_B}$$

genutzt. Zur Festlegung einer Kalibrierungsgröße erster Art wird in Schritt 255 eine Mindestanzahl $n_{min}$ vorgegeben, die durch die Durchlaufvariable $n_B$ erreicht oder überschritten werden muss, um den Schritt 260 zu erreichen. Sind hingegen zu diesem Zeitpunkt weniger als die geforderte Anzahl an Reifenzustandsgrößen in die Ermittlung der Kalibrierungsgröße erster Art eingegangen, so wird der Algorithmus mit dem Schritt 240 weitergeführt. Neben einer Mindestanzahl $n_{min}$ für alle Geschwindigkeitsbereiche $V_B$ ist in einem anderen Ausführungsbeispiel auch denkbar, mit $n_{min,B}$ jedem einzelnen Geschwindigkeitsbereich $V_B$ eine eigene Mindestanzahl vorzugeben.

Wird in Schritt 255 festgestellt, dass eine ausreichende Anzahl an Reifenzustandsgrößen in die Ermittlung der Kalibrierungsgröße erster Art eingegangen ist, werden die Kalibrierungsgrößen $Kal_{AB}$ und $Kal_{DB}$ im Schritt 260 im Speicher 155 abgelegt. Zur Ermittlung einer Kalibrierungsgröße zweiter Art, wird in Schritt 265 das Erreichen bzw. das Überschreiten einer vorgegebenen Maximalanzahl $n_{max}$, der in die Ermittlung der Kalibrierungsgröße eingegangenen Reifenzustandsgrößen, durch einen Vergleich mit der Durchlaufvariablen $n_B$ überprüft. Analog zur Bemerkung bezüglich der Minimalanzahl $n_{min}$ ist auch bei der Maximalanzahl $n_{max}$ ein Ausführungsbeispiel denkbar, bei dem mit $n_{max,B}$ jedem einzelnen Geschwindigkeitsbereich $V_B$ eine eigene Maximalanzahl vorzugeben werden kann. Als Beispiel für die Minimal- und Maximalanzahl $n_{min}$ bzw. $n_{max}$ können Werte gemäß der Tabelle:

| $n_{min}$ | $n_{max}$ |
|---|---|
| 250 | 5000 |

verwendet werden.

Fällt die Überprüfung in Schritt 265 negativ aus, d.h. sind weniger als die Maximalanzahl von Reifenzustandsgrößen zur Ermittlung der Kalibrierungsgröße verwendet worden, so wird der Algorithmus in Schritt 240 weitergeführt. Wird in Schritt 265 jedoch festgestellt, dass eine ausreichende Anzahl an Reifenzustandsgrößen ($n_B \geq n_{max}$) in die Ermittlung der Kalibrierungsgröße eingegangen sind, so stellt diese Kalibrierungsgröße zweiter Art die Vergleichsgröße für den entsprechenden Geschwindigkeitsbereich $V_B$ bis zur erneuten Feststellung einer Kalibrierungsanforderung $F_I = 1$ dar. Im Vergleich zur Kalibrierungsgröße erster Art wird die Kalibrierungsgröße bei einem weiteren Durchlauf ohne Kalibrierungsanforderung nicht mehr modifiziert. Dies wird dadurch angezeigt, dass im Schritt 270 das zum entsprechenden Geschwindigkeitsbereich $V_B$ gehörende Flag $F_{KB}$ gesetzt wird, d.h. es gilt $F_{KB} = 1$. Anschließend wird in Schritt 275 abgefragt, ob eines der Flags $F_{KB}$ für alle Indices B noch ungesetzt ist. Da dies eine fehlende Kalibrierungsgröße zweiter Art anzeigen würde, wird bei einer positiven Entscheidung auf den Schritt 240 zur weiteren Verarbeitung verwiesen. Sind jedoch die Flags $F_{KB}$ für alle Indices B gesetzt, so wird in Schritt 280 das Flag $F_I$ (155) gelöscht, d.h. zurückgesetzt $F_I = 0$. Dieses Zurücksetzten wird an den Block 110 weitergegeben, um eine erneute Kalibrierungsanforderung durch den Fahrer oder aufgrund automatischer Erkennung zu ermöglichen. Anschließend wird das Programm beendet, bevor es entweder in regelmäßigen zeitlichen Abständen oder aufgrund einer Kalibrierungsanforderung neu gestartet wird.

Ein möglicher Algorithmus zur Überwachung der Reifenzustände, insbesondere der Reifenluftdrücke, wird anhand eines Flussdiagramms in Figur 3 dargestellt. Nach dem Start des Algorithmus' wird in Schritt 300 das Flag $F_M$ (125) abgefragt. Wird dabei bei einem gesetzten Flag $F_M$ (125), d.h. $F_M$=1 festgestellt, dass sich das Fahrzeug in einer Fahrsituation befindet, die ungeeignet zur Auswertung einer Reifenzustandsgröße ist, wird der Algorithmus unmittelbar beendet. Wird jedoch ein ungesetztes Flag $F_M$ (125) festgestellt, so wird in Schritt 310 mit $v_{car}$ (148) die Fahrzugge-schwindigkeit repräsentierenden Fahrzeuggeschwindigkeitsgröße eingelesen. Durch einen Vergleich der Fahrzeuggeschwindigkeitsgröße $v_{car}$ (148) mit den vorher eingeteilten Geschwindigkeitsbereichen $V_B$ kann der Bereich bestimmt werden, in dem sich das Fahrzeug befindet. Aus diesem Vergleich erhält man den zugehörigen Wert des Index B, der den Überwachungsbereich festlegt und für die weitere Überwachung verwendet wird. Im folgenden Schritt 320 werden neben den Raddrehzahlgrößen $v_{VR}$ (140), $v_{VL}$ (142), $v_{VR}$ (144), und $v_{VL}$ (146) auch die Kalibrierungsgrößen $Kal_{AB}$ und $Kal_{DB}$, sowie die Durchlaufvariable $n_B$ aus dem Speicher 155 eingelesen. Die Überprüfung, ob im aktuellen Geschwindigkeitsbereich $V_B$ Kalibrierungsgrößen existieren, wird anschließend im Schritt 330 durchgeführt. So kann explizit durch den Vergleich gemäß

$$Kal_{DB} \neq 0$$

bzw.

$$Kal_{DB} \neq 0$$

die Existenz der Kalibrierungsgrößen für den Geschwindigkeitsbereich $V_B$ abgefragt werden. Weisen beide Kalibrierungsgrößen den Wert 0 auf, so wird der Algorithmus bis zum nächsten Startbefehl beendet. Fällt der Vergleich in Schritt 330 jedoch positiv aus, werden im Schritt 340 mit $\Delta v_A$ die achsweise und mit $\Delta v_D$ die diagonale Reifenzustands-größe gemäß

$$\Delta v_A := \{(v_{VL} + v_{VR}) - (v_{HL} + v_{HR})\}/ v_{car} .$$

$$\Delta v_D := \{(v_{VL} + v_{HR}) - (v_{VR} + v_{HL})\}/ v_{car}$$

auf Basis der in Schritt 320 bestimmten Raddrehzahlgrößen $v_{VR}$ (140), $v_{VL}$ (142), $v_{VR}$ (144) und $v_{VL}$ (146) normiert auf die Fahrzuggeschwindigkeit $v_{car}$ (148) ermittelt. Ist jedoch in Schritt 330 nur eine Kalibrierungsgröße $Kal_{DB}$ oder $Kal_{DB}$ auf 0 gesetzt, so wird die zugehörige Reifenzustandsgröße nicht ermittelt.

Bevor der Vergleich der ermittelten Reifenzustandsgrößen mit den Kalibrierungsgrößen erfolgt, müssen die zulässigen vorgegebenen Schwellwerte $SW_{AB}$ und $SW_{DB}$ an die der Kalibrierungsgröße zugrunde gelegten Anzahl der Reifenzustandsgrößen angepasst werden. Dies ist leicht ersichtlich, da die Schwellwerte unempfindlicher d.h. größer sein müssen, je geringer die Anzahl der den Kalibrierungsgrößen zugrunde liegenden Reifenzustandsgrößen ist. Im vorliegenden Ausführungsbeispiel wird deshalb in Schritt 350 die Ermittlung der Schwellwerte abhängig von der Anzahl $n_B$ der in die Kalibrierung eingegangenen Reifenzustandsgrößen gemacht. So lassen sich gemäß

$$SW_{AB} = SW_{AB} * (1 + SW_F)$$

bzw.

$$SW_{DB} = SW_{DB} * (1 + SW_F)$$

die Schwellwerte durch den Faktor $SW_F$ in Abhängigkeit von der Anzahl $n_B$ modifizieren. eine mögliche Zuweisung des Modifikationsfaktors in Relation zur Anzahl $n_B$ zeigt die Tabelle:

| $n_B \geq$ | Faktor $SW_F$ |
|---|---|
| 250 | 1/10 |
| 500 | 5/100 |
| 1000 | 2/100 |
| 2000 | 1/100 |
| 3300 | 3/500 |
| 5000 | 1/500 |

So bedeutet beispielsweise eine Anzahl 2000 > $n_B$ > 1000 eine Modifikation der Schwellwerte mit dem Faktor 1,02. Für feinere Abstufungen ist es ohne weiteres möglich, zusätzliche Einteilungen bzw. eine gänzlich andere Zuweisung zu wählen. Die Abhängigkeit des Schwellwerts von der Anzahl der Reifenzustandsgrößen, die in die Ermittlung der Kalibrierungsgröße einfließt, ist jedoch nicht die einzige denkbare Abhängigkeit. In einem weiteren Ausführungsbeispiel werden die Schwellwerte in Abhängigkeit von der Fahrzeuggeschwindigkeit $v_{car}$ (148) bzw. vom Geschwindigkeitsbereich $V_B$ modifiziert.

Die in Schritt 350 ermittelten Schwellwerte $SW_{AB}$ und $SW_{DB}$ werden anschließend im Schritt 360 dazu verwandt, die Abweichung der ermittelten Reifenzustandsgrößen $\Delta v_A$ bzw. $\Delta v_D$ von den Kalibrierungsgrößen $Kal_{AB}$ und $Kal_{DB}$ zu bestimmen. Zu diesem Zweck wird überprüft, ob die Gleichungen gemäß

$$|Kal_{AB} - \Delta v_{AB}| < SW_{AB}$$

oder

$$|Kal_{DB} - \Delta v_{DB}| < SW_{DB}$$

erfüllt sind. Ist das der Fall, wird der Algorithmus ohne weitere Konsequenzen beendet. Für denn Fall, dass eine der Abweichungen über den Schwellwert hinaus geht, kann im Schritt 370 aus der Zusammenschau der Abweichungen auf das Rad geschlossen werden, welches einen Reifendruckverlust aufweist. Mit einer Fehlermeldung 160 an eine akustische und/oder optische Anzeige 170, die den Fahrer über den Reifendruckverlust informiert, sowie einer geeigneten Ansteuerung 180 eines Systems 190 zur Kompensation des drohenden Verlusts der Fahrstabilität in Schritt 380 schließt der Algorithmus den Überwachungszyklus.

Neben der Überwachung des Reifendrucks in Geschwindigkeitsbereichen mit Hilfe von unvollständig durchgeführten Kalibrierungswerten besteht in einem weiteren Ausführungsbeispiel die Möglichkeit, Kalibrierungswerte für solche Geschwindigkeitsbereiche zu extrapolieren, für die noch keine vollständige Kalibrierung durchgeführt worden ist. Dazu wird im Programmablauf nach Figur 3 nach dem einlesen der Raddrehzahlgrößen $v_{VR}$ (140), $v_{VL}$ (142), $v_{VR}$ (144), und $v_{VL}$ (146) sowie den Kalibrierungsgrößen $Kal_{AB}$ und $Kal_{DB}$ und der Durchlaufvariablen $n_B$ aus dem Speicher 155 ein weiterer in Figur 4 abgebildeter Programmteil durchlaufen. Dabei wird zunächst in Schritt 400 mit $F_{KB}=1$ überprüft, ob im aktuellen Geschwindigkeitsbereich B, in dem sich das Fahrzeug befindet, bereits eine vollständige Kalibrierung durchgeführt wurde und ein entsprechender Kalibrierungswert $Kal_{AB}$ bzw. $Kal_{DB}$ existiert. Falls sich bei dieser Überprüfung herausstellt, dass bereits eine vollständige Kalibrierung erfolgt ist, so wird im Programmablauf nach Figur 3 mit dem Schritt 330 weiterverfahren. Ist jedoch noch keine vollständige Kalibrierung erfolgt, so wird im Schritt 410 mit $F_{K(B-1)}=1$ überprüft, ob für den unterhalb des Geschwindigkeitsbereichs B liegenden Geschwindigkeitsbereich B-1 ein Kalibrierungswert aus einer vollständigen Kalibrierung vorliegt. Ist das der Fall, so wird ein Kalibrierungsdatensatz $Kal_{AB}$ und $Kal_{DB}$ für den Geschwindigkeitsbereich B aus dem Kalibrierungsdatensatz $Kal_{A(B-1)}$ und $Kal_{D(B-1)}$ für den Geschwindigkeitsbereich B-1 extrapoliert. Dazu wird zunächst in Schritt 420 die Differenz zwischen der aktuellen Fahrzeuggeschwindigkeit $v_{car}$ (148) und dem oberen Grenzgeschwindigkeit für den Geschwindigkeitsbereich B-1 gemäß

$$\Delta v = |v_{car} — \text{obere Grenzgeschwindigkeit des Bereichs B-1}|$$

gebildet. Dabei stellt $\Delta v$ ein Maß für die Abweichung der aktuellen Fahrzeuggeschwindigkeit $v_{car}$ (148) vom nächsten darunter liegenden Geschwindigkeitsbereich dar. In Abhängigkeit von dieser Abweichung werden in Verbindung mit den Kalibrierungswerten aus dem Geschwindigkeitsbereich B-1 gemäß

$$Kal_B = f(Kal_{B-1}, \Delta v)$$

für den Geschwindigkeitsbereich B Kalibrierungswerte erzeugt. Eine mögliche Zuweisung der Kalibrierungswerten kann dabei mit

$$Kal_{AB} = Kal_{A(B-1)} * (1+Kal_F)$$

bzw.

$$Kal_{DB} = Kal_{D(B-1)} * (1+Kal_F)$$

erfolgen, wobei die Modifikation der Kalibrierungsgrößen $Kal_F$ in Abhängigkeit von $\Delta v$ beispielsweise entsprechend der folgenden Tabelle durchgeführt werden kann:

| Abweichung in km/h | Faktor $Kal_F$ |
|---|---|
| $0 < \Delta v \leq 5$ | 2/100 |
| $5 < \Delta v \leq 10$ | 5/100 |
| $10 < \Delta v \leq 20$ | 1/00 |
| $20 < \Delta v \leq 30$ | 2/10 |
| $30 < \Delta v \leq 40$ | 5/10 |

Wird in Schritt 410 festgestellt, dass keine vollständige Kalibrierung im Geschwindigkeitsbereich B-1 durchgeführt wurde, wird in Schritt 440 eine entsprechende Abfrage für den Geschwindigkeitsbereich B+1 durchgeführt. Ist das Flag $F_{K(B+1)}$ nicht gesetzt, so wird die Überwachung abgebrochen. Wird mit $F_{K(B+1)}=1$ jedoch eine vollständige Kalibrierung im Geschwindigkeitsbereich B+1 erkannt, so wird entsprechend der Vorgehensweise in Schritt 420 und 430 zunächst in Schritt 450 gemäß

$$\Delta v = |v_{car} - \text{unterer Grenzgeschwindigkeit des Bereichs B + 1}|$$

die Abweichung der aktuellen Fahrzeuggeschwindigkeit $v_{car}$ (148) vom nächsten darüber liegenden Geschwindigkeitsbereich B+1 ermittelt. Darauf folgt in Schritt 460 eine Extrapolation der Kalibrierungswerte für den Geschwindigkeitsbereich B gemäß

$$Kal_B = f(Kal_{B+1}, \Delta v)$$

Ebenso wie schon für den Schritt 430 entsprechend dargestellt wurde, besteht eine mögliche Zuweisung der Kalibrierungswerten durch

$$Kal_{AB} = Kal_{A(B+1)} * (1+Kal_F)$$

bzw.

$$Kal_{DB} = Kal_{D(B+1)} * (1+Kal_F)$$

Dabei können die Modifikationen der Kalibrierungsgröße $Kal_F$ entsprechend der zuvor dargestellten Tabelle durchgeführt werden.
Mit dem Schritt 470 wird die Existenz der Kalibrierungsgrößen im Kalibrierungsdatensatz des aktuellen Geschwindigkeitsbereich $V_B$ überprüft. Weisen beide Kalibrierungsgrößen den Wert 0 auf, so wird der Algorithmus bis zum nächsten Startbefehl beendet. Fällt der Vergleich in Schritt 470 jedoch positiv aus, so werden im Schritt 480 mit $\Delta v_A$ die achsweise und mit $\Delta v_D$ die diagonale Reifenzustandsgröße analog zu Schritt 340 gemäß

$$\Delta v_A := \{(v_{VL} + v_{VR})\text{-}(v_{HL} + v_{HR})\}/v_{car}.$$

$$\Delta v_D := \{(v_{VL} + v_{HR})\text{-}(v_{VR} + v_{HL})\}/v_{car}$$

auf Basis der in Schritt 320 bestimmten Raddrehzahlgrößen $v_{VR}$ (140), $v_{VL}$ (142), $v_{VR}$ (144) und $v_{VL}$ (146) normiert auf die Fahrzeuggeschwindigkeit $v_{car}$ (148) ermittelt. Ist jedoch in Schritt 470 eine Kalibrierungsgröße $Kal_{DB}$ oder $Kal_{DB}$ auf 0 gesetzt, so wird die zugehörige Reifenzustandsgröße nicht ermittelt.

Bei der Überwachung mit Hilfe der extrapolierten Kalibrierungsgrößen kann darüber hinaus eine adaptive Anpassung der Schwellwerte in Abhängigkeit von der Geschwindigkeitsabweichung $\Delta v$ durchgeführt werden. So können die entsprechenden Schwellwerte gemäß

$$SW_{AB} = SW_{AB} * (1+SW_F)$$

bzw.

$$SW_{DB} = SW_{DB} * (1+SW_F)$$

mit einem Korrekturfaktor $SW_F$ versehen werden, der in Abhängigkeit von $\Delta v$ gewählt werden kann. Eine mögliche Zuordnung ist mit

| Abweichung in km/h | Faktor $SW_F$ |
|---|---|
| $0 < \Delta v \leq 5$ | 2/100 |
| $5 < \Delta v \leq 10$ | 5/100 |
| $10 < \Delta v \leq 20$ | 1/00 |
| $20 < \Delta v \leq 30$ | 2/10 |
| $30 < \Delta v \leq 40$ | 5/10 |

denkbar. Nach der Ermittlung der modifizierten Schwellwerte für die extrapolierten Kalibrierungsgrößen wird die Überwachung wie in Figur 3 dargestellt wird, mit dem Schritt 360 fortgeführt.

In Figur 5 ist ein weiteres Ausführungsbeispiel dargestellt, bei dem das Überschreiten eines Grenzwertes durch eine Fahrzustandsgröße den Wechsel eines Überwachungsmodus anzeigt. Durch den Wechsel des Überwachungsmodus wird eine Kalibrierungsanforderung ( 115) erzeugt und optional unmittelbar darauf der Algorithmus, der zur Figur 2 beschrieben wurde gestartet.

In der konkreten Ausführung nach Figur 5 wird zunächst in Schritt 500 abgefragt, ob bereits ein Erreichen eines Hochgeschwindigkeitsbereichs zu früheren Betriebszeitpunkten des Fahrzeugs stattgefunden hat. Dies kann beispielsweise durch ein gesetztes Flag $F_H$, d.h. $F_H=1$ festgestellt werden. Wird das gesetzte Flag $F_H$ erkannt, so wird der Algorithmus nach Figur 5 beendet. Andernfalls werden in Schritt 510 die Grenzwerte $SW_G$ und $SW_t$ aus dem Speicher 155 eingelesen. Der Grenzwert $SW_G$ stellt dabei einen Fahrzeuggeschwindigkeitswert dar, der, wenn er von einem neuen Reifen das erste Mal überschritten wird, eine irreversible, einmalige plastische Verformung (Aufweitung) des Reifens nach sich zieht. Um eine Verformung des Reifens zu beobachten, muss der Reifen jedoch eine vorgegebene Zeit $SW_t$ oberhalb der Fahrzeuggeschwindigkeit $SW_G$ gefahren werden. Beide Größen sind Reifenindividuell und können beispielsweise durch einen externen Update oder durch eine automatische Erkennung des Reifens bzw. des Reifenwechsels im Speicher 155 aktualisiert werden. Neben dem Einlesen der Werte $SW_G$ und $SW_t$ wird in Schritt 510 ein interner Zeitmesser mit t=0 gestartet. Im nachfolgenden Schritt 520 wird die momentane Fahrzeuggeschwindigkeit $v_{car}$ (148) eingelesen. Diese momentane Fahrzeuggeschwindigkeit $v_{car}$ (148) wird im Schritt 530 mit dem Grenzwert $SW_G$ verglichen. Liegt dabei die momentane Fahrzeuggeschwindigkeit $v_{car}$ (148) unter dem Grenzwert $SW_G$, so wird der Algorithmus beendet. Überschreitet $v_{car}$ (148) jedoch $SW_G$, so wird im Schritt 540 das zeitliche Verhalten des Überschreitens geprüft. Wird dabei festgestellt, dass der Reifen noch keine ausreichende Zeit mit der entsprechenden Geschwindigkeit gefahren wurde, wird der Algorithmus mit dem Schritt 520 weiter abgearbeitet. Wurde der Reifen jedoch eine vorgegebene Zeit oberhalb des vorgesehenen Geschwindigkeitsgrenzwertes $SW_G$ betrieben, d.h. verlief der Vergleich $t>SW_t$ positiv, so werden im Schritt 550 die Flags $F_H$ und $F_I$ (115) gesetzt und im Speicher 155 abgespeichert. Dabei repräsentiert ein gesetztes Flag $F_H=1$, dass die Reifen eine plastische Verformung erfahren haben. Mit dem gesetzten Flag $F_I=1$ wird darüber hinaus ein erneuter Start des Kalibrierungsalgorithmus' ermöglicht, wie er in einem vorhergehenden Ausführungsbeispiel gezeigt wurde. Optional kann anschließend an den Schritt 550 im Schritt 560 auch der Start des Kalibrierungsalgorithmus' beispielsweise nach dem Ausführungsbeispiel nach Figur 2 veranlasst werden, bevor der Algorithmus nach Figur 5 beendet wird.

Bei der Berücksichtigung der irreversiblen, einmaligen, plastischen Verformung der Neureifen bei Überschreiten einer Geschwindigkeitsschwelle spielt besonders der Fall eines einzelnen neuen Reifens eine kritische Rolle. Wird beispielsweise ein Ersatzrad an ein Fahrzeug mit bereits 3 anderen eingefahrenen Reifen angebracht, muss der Kalibrierungsvorgang erneut gestartet werden, da ansonsten die Verformung des neuen Reifens nach Überschreiten der Geschwindigkeitsschwelle zu einem langsameren Abrollen des Ersatzrades führen würde. Der erneute Start des Kalibrierungsvorgangs ist dabei einerseits manuell durch den Fahrer des Fahrzeugs möglich, aber auch automatisch durch ein zurücksetzten des Flags $F_I$, d.h. $F_I=0$. Dies kann beispielsweise dadurch geschehen, dass beim Wechsel des Reifens das Flag $F_I$ (115) durch den Techniker bzw. Fahrer manuell gelöscht wird. Eine weitere Möglichkeit besteht darin, dass der Wechsel eines Reifens automatisch erkannt wird und ein Zurücksetzten des Flags $F_I$ (115) nach sich zieht.

Die in den aufgeführten Ausführungsbeispielen dargestellte Algorithmen können zur Überwachung in regelmäßigen Abständen oder aufgrund einer gezielten Aktion des Fahrers gestartet werden.

Bezugszeichenliste

| | |
|---|---|
| $V$ | für alle |
| $\exists$ | es existiert |
| $\cup$ | logisches UND |
| $\cap$ | logisches ODER |
| $F_I$ | Kalibrierungsanforderung (Initialisierungswunsch) |
| $F_M$ | Flag, das eine nicht zur Überwachung bzw. Kalibrierung geeignete Fahrsituation anzeigt |
| $F_{KB}$ | Flag zur Bestimmung des kalibrierten Geschwindigkeitsbereichs |
| $F_H$ | Flag zur Bestimmung der Hochgeschwindigkeitsfahrt |
| $v_{VR}$, $v_{VL}$ | Raddrehzahlgrößen für die Räder der vorderen Achse |
| $v_{HR}$, $v_{HL}$ | Raddrehzahlgrößen für die Räder der hinteren Achse |
| $v_{car}$ | Fahrzeuggeschwindigkeit repräsentierende Größe |
| $n_B$ | Durchlaufvariable, die die Anzahl der in die Kalibrierungsgröße eingegangen Reifenzustandsgrößen angibt |
| $n_{min}$ | Mindestanzahl der zur Ermittlung einer ersten Kalibrierungsgröße nötigen Reifenzustandsgrößen |
| $n_{max}$ | Mindestanzahl der zur Ermittlung einer zweiten Kalibrierungsgröße nötigen Reifenzustandsgrößen |
| $B$ | Index zur Zuweisung des Geschwindigkeitsbereichs |
| $V_B$ | Geschwindigkeitsbereich mit Index 1 ... B |
| $Z_K$ | Zähler für den aktuellen Kalibrierungsbereich |
| $\Delta v_A$ | Reifenzustandsgröße bzgl. achsweiser Ermittlung |
| $\Delta v_D$ | Reifenzustandsgröße bzgl. diagonaler Ermittlung |
| $\Delta v$ | Abweichung der aktuellen Geschwindigkeit $v_{car}$ von einem angrenzenden Geschwindigkeitsbereich |
| $t$ | Zeit |
| $Kal_A$ | Kalibrierungsgröße der achsweisen Überwachung |
| $Kal_D$ | Kalibrierungsgröße der diagonalen Überwachung |
| $Kal_F$ | Modifikation der Kalibrierungsgröße |
| $SW_A$ | Schwellwert der achsweisen Überwachung |
| $SW_D$ | Schwellwert der diagonalen Überwachung |
| $SW_F$ | Modifikation des Schwellwerts |
| $SW_G$ | Grenzwert für den Vergleich der Fahrzustandsgröße |
| $SW_t$ | Zeitlicher Grenzwert für den Vergleich der Fahrzustandsgröße |
| 100 | Überwachungseinheit |
| 110 | System zur Erzeugung einer Kalibrierungsanforderung |
| 115 | Flag $F_I$ |
| 120 | System zur Erkennung von nicht zur Überwachung bzw. Kalibrierung geeigneten Fahrsituationen |

| 125 | Flag $F_M$ |
|---|---|
| 130-136 | Raddrehzahlsensoren |
| 138 | System zur Ermittlung der Fahrzeuggeschwindigkeit |
| 140-146 | Raddrehzahlgrößen |
| 148 | Fahrzeuggeschwindigkeitsgröße |
| 150 | Auswerteeinheit |
| 155 | Speicher der Kalibrierungsgrößen und der Durchlaufvariablen $n_B$ |
| 160 | Fehlermeldung an die akustische und/oder optische Anzeige |
| 170 | Akustische und/oder optische Anzeige |
| 180 | Ansteuerung des Systems 190 |
| 190 | System, das geeignet ist, einer drohenden Fahrinstabilität aufgrund eines Reifendruckverlustes entgegenzuwirken |

**Patentansprüche**

1.  Verfahren zur Überwachung eines Betriebszustands wenigstens eines Reifens eines Fahrzeugs, wobei insbesondere als Betriebszustand ein Reifenzustand des Rades vorgesehen ist, wobei vorgesehen ist, dass in die Überwachung wenigstens

    - eine Reifenzustandsgröße, die den aktuellen Betriebszustand des Reifens repräsentiert, und
    - eine Kalibrierungsgröße, die den Sollreifenzustand des Reifens repräsentiert, eingeht (340),

    **dadurch gekennzeichnet, dass** die Überwachung in unterschiedlichen Überwachungsmodi erfolgt, wobei der zur Überwachung herangezogene Überwachungsmodus in Abhängigkeit von wenigstens einer den Fahrzustand des Fahrzeugs repräsentierenden am Fahrzeug bestimmbaren Fahrzustandsgröße, insbesondere der Fahrzeuggeschwindigkeit (148), gewählt wird.

2.  Verfahren nach Anspruch 1, **dadurch gekennzeichnet, dass** der Überwachungsmodus in Abhängigkeit eines Vergleichs der Fahrzustandsgröße, insbesondere der Fahrzeuggeschwindigkeit (148), mit einem vorgebbaren Grenzwert gewählt wird, wobei vorgesehen ist, dass die Überwachung von einem ersten in einen zweiten Überwachungsmodus übergeht, wenn

    - der Vergleich ein Überschreiten des Grenzwertes durch die Fahrzustandsgröße ergibt und
    - das Überschreiten des Grenzwertes wenigstens eine vorgebbare Zeitdauer andauert,

    wobei insbesondere vorgesehen ist, dass die Überprüfung eines weiteren Wechsels des Überwachungsmodus nach erfolgtem Wechsel in den zweiten Überwachungsmodus abgeschlossen ist.

3.  Verfahren nach Anspruch 1 oder 2, **dadurch gekennzeichnet, dass** jeder Überwachungsmodus wenigstens einen Kalibrierungsmodus enthält,
    wobei vorgesehen ist, dass für jeden Kalibrierungsmodus wenigstens eine Kalibrierungsgröße ermittelt wird,
    wobei die Ermittlung der Kalibrierungsgröße (250 bis 270) in Abhängigkeit von

    - wenigstens einer Reifenzustandsgröße, und/oder
    - der Fahrzustandsgröße (148), und/oder
    - einer Kalibrierungsanforderung (115), und/oder
    - dem Überwachungsmodus

    erfolgt.

4.  Verfahren nach Anspruch 3, **dadurch gekennzeichnet, dass** die Ermittlung der Kalibrierungsgröße in Abhängigkeit von

    - der Anzahl der erfassten Reifenzustandsgrößen, und
    - dem Überwachungsmodus

    erfolgt, wobei insbesondere vorgesehen ist,

- eine Kalibrierungsgröße erster Art (260) zu bilden, wenn wenigstens eine erste vorgegebene Anzahl an Reifenzustandsgrößen in die Ermittlung der Kalibrierungsgröße eingegangen ist, und/oder
- eine Kalibrierungsgröße zweiter Art (270) zu bilden, wenn eine zweite vorgegebene Anzahl an Reifenzustandsgrößen in die Ermittlung der Kalibrierungsgröße eingegangen ist,

wobei insbesondere vorgesehen ist, die Kalibrierungsgröße als Mittelwert (250) der in die Ermittlung eingegangenen Anzahl an Reifenzustandsgrößen zu bestimmen.

**5.** Verfahren nach Anspruch 4, **dadurch gekennzeichnet, dass**

- die Ermittlung der Kalibrierungsgröße erster Art (260) bis zur Vorraussetzung der Bildung der Kalibrierungsgröße zweiter Art (270) erfolgt, und
- die Ermittlung der Kalibrierungsgröße bei Bildung der Kalibrierungsgröße zweiter Art (270) beendet wird,

wobei insbesondere vorgesehen ist, die Ermittlung der Kalibrierungsgröße erneut zu beginnen, wenn eine Kalibrierungsanforderung (115) erkannt wird.

**6.** Verfahren nach Anspruch 3 oder 4, **dadurch gekennzeichnet, dass** in Abhängigkeit vom Überwachungsmodus die Überwachung des Reifenzustands anhand der Ermittlung der aktuellen Reifenzustandsgröße durchgeführt wird, wobei zur Überwachung eine Fehlfunktion des Reifenzustands dann erkannt wird, wenn die ermittelte Reifenzustandsgröße in Bezug zur Kalibrierungsgröße des Überwachungsmodus außerhalb eines vorgegebenen Bereichs liegt,
wobei insbesondere vorgesehen ist, dass der vorgegebene Bereich und/oder der Schwellwert in Abhängigkeit von

- wenigstens einer Fahrzustandsgröße (148), und/oder
- der Anzahl der Reifenzustandsgrößen, die in die Ermittlung der Kalibrierungsgröße eingegangen ist,

gewählt wird.

**7.** Verfahren nach einem der Ansprüche 1, 2 oder 6, **dadurch gekennzeichnet, dass** zur Überwachung des Reifenzustands die Reifenzustandsgröße durch

- eine Differenzbildung der Raddrehzahlen an jeweils wenigstens zwei Rädern bestimmt wird, wobei insbesondere vorgesehen ist, dass

  - die Differenzen der Raddrehzahlen an den Rädern einer Achse gebildet werden, und/oder
  - die Differenzen der Raddrehzahlen an den Rädern gebildet werden, die diagonal zueinander angeordnet sind,

und/oder

- eine Differenzbildung der Raddrehzahlen zwischen der Summe der Raddrehzahlen an

  - den Rädern der vorderen Achse und
  - den Rädern der hinteren Achse

und/oder

- eine Differenzbildung der Raddrehzahlen zwischen der Summe der Raddrehzahlen an

  - den Rädern der linken Seite und
  - den Rädern der rechten Seite

normiert auf die Fahrzeuggeschwindigkeit (148) durchgeführt wird,
wobei insbesondere vorgesehen ist, die Raddrehzahlen durch eine die Raddrehzahl repräsentierende Raddynamikgröße (140 bis 146) zu ermitteln.

**8.** Verfahren nach Anspruch 3, **dadurch gekennzeichnet, dass** die Kalibrierungsanforderung (115) zu einem vorgegebenen Zeitpunkt erfolgt, wobei insbesondere vorgesehen ist, den Zeitpunkt

- abhängig von einem Reifenwechsel, und/oder
- abhängig von einem Aufpumpvorgang des Reifens, und/oder
- durch einen vom Fahrer des Fahrzeugs initiierten Befehl vorzugeben.

**9.** Verfahren nach Anspruch 6, **dadurch gekennzeichnet, dass** in Abhängigkeit von einer erkannten Fehlfunktion

- der Fahrer des Fahrzeugs über das Auftreten einer Fehlfunktion informiert wird, wobei insbesondere vorgesehen ist, dass dem Fahrer eine Fehlfunktion optisch und/oder akustisch mitgeteilt wird (170), und/oder
- ein Eingriff (180) in eine im Fahrzeug befindliche Bremsanlage (190) und/oder in ein aktives Lenksystem (190) stattfindet, dass der Ursache der Fehlfunktion entgegenwirkt.

**10.** Verfahren nach Anspruch 2, **dadurch gekennzeichnet, dass** das Überschreiten des Grenzwertes während einer vorgegebenen Zeit einen plastisch verformten Zustand des Reifens repräsentiert.

**11.** Vorrichtung zur Überwachung eines Betriebszustands wenigstens eines Reifens eines Fahrzeugs, wobei insbesondere als Betriebszustand der Reifenzustand des Rades vorgesehen ist, wobei vorgesehen ist, dass in die Überwachung wenigstens

- eine Reifenzustandsgröße, die den aktuellen Betriebszustand des Reifens repräsentiert, und
- eine Kalibrierungsgröße, die den Sollreifenzustand des Reifens repräsentiert, eingeht (340),

**dadurch gekennzeichnet, dass** die Überwachung in unterschiedlichen Überwachungsmodi erfolgt, wobei der zur Überwachung herangezogene Überwachungsmodus in Abhängigkeit von wenigstens einer den Fahrzustand des Fahrzeugs repräsentierenden am Fahrzeug bestimmbaren Fahrzustandsgröße, insbesondere der Fahrzeuggeschwindigkeit (148), gewählt wird.

**12.** Vorrichtung nach Anspruch 11, **dadurch gekennzeichnet, dass** jeder Überwachungsmodus wenigstens einen Kalibrierungsmodus enthält,
wobei vorgesehen ist, dass für jeden Kalibrierungsmodus wenigstens eine Kalibrierungsgröße ermittelt wird, wobei die Ermittlung der Kalibrierungsgröße (250 bis 270) in Abhängigkeit von

- wenigstens einer Reifenzustandsgröße, und/oder
- der Fahrzustandsgröße (148), und/oder
- einer Kalibrierungsanforderung (115), und/oder
- dem Überwachungsmodus

erfolgt.

**13.** Vorrichtung nach Anspruch 12, **dadurch gekennzeichnet, dass** wenigstens ein Mittel (100) zur Ermittlung der Kalibrierungsgröße in Abhängigkeit von

- der Anzahl der erfassten Reifenzustandsgrößen, und
- dem Überwachungsmodus

vorgesehen ist, wobei insbesondere vorgesehen ist,

- eine Kalibrierungsgröße erster Art (260) zu bilden, wenn wenigstens eine erste vorgegebene Anzahl an Reifenzustandsgrößen in die Ermittlung der Kalibrierungsgröße eingegangen ist, und/oder
- eine Kalibrierungsgröße zweiter Art (270) zu bilden, wenn eine zweite vorgegebene Anzahl an Reifenzustandsgrößen in die Ermittlung der Kalibrierungsgröße eingegangen ist,

wobei insbesondere vorgesehen ist, die Kalibrierungsgröße als Mittelwert (250) der in die Ermittlung eingegangen Anzahl an Reifenzustandsgrößen zu bestimmen.

**14.** Vorrichtung nach Anspruch 12 oder 13, **dadurch gekennzeichnet, dass** Mittel (100) vorgesehen sind, die in Abhängigkeit vom Überwachungsmodus die Überwachung des Reifenzustands anhand der Ermittlung der aktuellen Reifenzustandsgröße durchführen,

wobei zur Überwachung eine Fehlfunktion des Reifenzustands dann erkannt wird, wenn die ermittelte Reifenzustandsgröße in Bezug zur Kalibrierungsgröße des Überwachungsmodus außerhalb eines vorgegebenen Bereichs liegt,

wobei insbesondere vorgesehen ist, dass der vorgegebene Bereich in Abhängigkeit von

- wenigstens einer Fahrzustandsgröße (148), und/oder
- der Anzahl der Reifenzustandsgrößen, die in die Ermittlung der Kalibrierungsgröße eingegangen ist,

gewählt wird.

15. Computerprogramm mit Programmcodemitteln, um alle Schritte eines Verfahrens nach einem der Ansprüche 1 bis 10 durchzuführen, wenn das Computerprogramm auf einem Computer oder einer entsprechenden Recheneinheit, insbesondere einer Recheneinheit in einem System nach Anspruch 11 bis 14, durchgeführt wird.

16. Computerprogrammprodukt mit Programmcodemitteln, die auf einem computerlesbaren Datenträger gespeichert sind, um ein Verfahren nach einem der Ansprüche 1 bis 10 oder einer entsprechenden Recheneinheit, insbesondere eine Recheneinheit in einem System gemäß Anspruch 11 bis 14, durchzuführen.

**Fig. 1**

**Fig. 2**

**Start**

300

$F_M = 1$ ?

Y

N

310

320

A

330

N

$Kal_{AB} \neq 0 \cap Kal_{DB} \neq 0$ ?

Y

340

350

B

360

Y

$|Kal_{AB} - \Delta v_{AB}| < SW_{AB}$

$|Kal_{DB} - \Delta v_{DB}| < SW_{DB}$

N

**End**

370

**Fig. 3**

380

A

400

Y     N

$F_{KB} = 1$ ?

330

410

Y     N

$F_{K(B-1)} = 1$

440

420

Y     N

$F_{K(B+1)} = 1$

450

430     460

$Kal_B = f(Kal_{B-1}, \Delta v)$     $Kal_B = f(Kal_{B+1}, \Delta v)$

470

N

$Kal_{AB} \neq 0 \cap Kal_{DB} \neq 0$ ?

Y     480

490

End

End

B

**Fig. 4**

**Start**

500

$F_H = 1$ ? — Y → **End**

N

510

520

530

$V_{car} > SW_G$? — N → **End**

Y

540

$t > SW_t$? — N

Y

550

$F_H = 1,$
$F_I = 1$

560

**End**

**Fig. 5**

**Europäisches Patentamt**

## EUROPÄISCHER RECHERCHENBERICHT

Nummer der Anmeldung

EP 03 01 1818

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 2000, no. 20, 10. Juli 2001 (2001-07-10) & JP 2001 080323 A (UNISIA JECS CORP;NISSAN MOTOR CO LTD), 27. März 2001 (2001-03-27) * Zusammenfassung * | 1,11,15,16 | B60C23/06 |
| A | | 2,3,7,12 | |
| X | EP 1 106 398 A (SUMITOMO RUBBER IND ;SUMITOMO ELECTRIC INDUSTRIES (JP)) 13. Juni 2001 (2001-06-13) * Absatz '0010! – Absatz '0013!; Abbildungen 1-4 * | 1,11,15,16 | |

**RECHERCHIERTE SACHGEBIETE (Int.Cl.7)**

B60C

Der vorliegende Recherchenbericht wurde für alle Patentansprüche erstellt

| Recherchenort | Abschlußdatum der Recherche | Prüfer |
|---|---|---|
| DEN HAAG | 15. Januar 2004 | Smeyers, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**          EP 03 01 1818

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2004

| Im Recherchenbericht angeführtes Patentdokument | Datum der Veröffentlichung | Mitglied(er) der Patentfamilie | Datum der Veröffentlichung |
|---|---|---|---|
| JP 2001080323 A | 27-03-2001 | KEINE | |
| EP 1106398 A | 13-06-2001 | JP 2001163021 A<br>JP 2002087030 A<br>EP 1106398 A2<br>US 2001003437 A1 | 19-06-2001<br>26-03-2002<br>13-06-2001<br>14-06-2001 |

Für nähere Einzelheiten zu diesem Anhang : siehe Amtsblatt des Europäischen Patentamts, Nr.12/82